# EUROPEAN PATENT SPECIFICATION

(11) **EP 3 617 176 B1**
(45) Date of publication and mention of the grant of the patent: **03.04.2024**
(21) Application number: 17896509.1
(22) Date of filing: 17.02.2017
(51) Int. Cl.: C05B 13/06, A01C 21/00

(54) **USE OF A THERMOPHOSPHATE FERTILIZER THAT HAS LOW SOLUBILITY IN WATER AND METHOD FOR REDUCING EUTROPHICATION OF WATER BODIES DUE TO FERTILIZERS**
VERWENDUNG EINES THERMOPHOSPHATDÜNGEMITTELS MIT GERINGER LÖSLICHKEIT IN WASSER UND VERFAHREN ZUR VERRINGERUNG DER EUTROPHIERUNG VON GEWÄSSERN AUFGRUND VON DÜNGEMITTELN
UTILISATION D'UN ENGRAIS THERMOPHOSPHATE PEU SOLUBLE DANS L'EAU ET PROCÉDÉ DE RÉDUCTION DE L'EUTROPHISATION DES EAUX CAUSÉE PAR DES ENGRAIS

(43) Date of publication of application: 04.03.2020
(73) Proprietor: Mineraçâo Curimbaba Ltda., 37704-392 Poços de Caldas - MG (BR)
(72) Inventor: CURIMBABA, Sebastiao, 37704-392 Poços de Caldas - MG (BR); CHAVASCO FERREIRA, Ramiro, 37701-403 Poços de Caldas - MG (BR); HORNE CURIMBABA FERREIRA, Rafael José, 37701-074 Poços de Caldas - MG (BR); WARWICK KERR DE PAIVA CÔRTES, Gabriel, 37704-392 Poços de Caldas - MG (BR); DE PAIVA CÔRTES, Guilherme, 37701-104 Poços de Caldas - MG (BR)
(74) Representative: Abel & Imray LLP
(86) International application number: PCT/BR2017/050035
(87) International publication number: WO 2018/148813

(56) References cited:
- WO-A1-02/083598
- CA-A1- 2 914 452
- CN-A- 101 288 636
- CN-A- 105 900 586
- DE-B- 1 236 484
- ARTHUR PINTO CHAVES et al.: "Criticas ao Modelo Brasileiro de Fertilizantes Fosfatados de Alta Solubilidade", Serie Estudos e Documentos, 1 January 2004 (2004-01-01), pages 14-22-23, XP055624895,
- GLAUCIA PANTANO et al.: "Sustentabilidade no uso do Fósforo: Uma questão de segurança hidrica e alimentar", Química Nova, vol. 39, no. 6, 2016, pages 732-740, XP055535361,
- FRANCIROSE SHIGAKI: "Transporte de fósforo na enxurrada superficial em função do tipo de fonte de P e intensidade das chuvas: Relevancia a gerencia ambiental em sistemas de produção brasileiros", Tese de doutorado, ESALQ/ USP, 1 January 2006 (2006-01-01), pages 43, 86-107, XP055624910,

## Description

### FIELD OF THE INVENTION

The invention relates to the use of a poorly water-soluble thermophosphate fertilizer to reduce water eutrophication caused by fertilizers, particularly due to fertilizer production or soil fertilization. The invention further relates to a method of reducing water eutrophication caused by fertilizers.

### BACKGROUND OF THE INVENTION

Eutrophication is a destructive process that takes place in fresh water resources worldwide, which is mostly caused by pollution. Eutrophication is a term that describes the natural degradation imposed on excessively nutrient- enriched lakes and rivers, which promotes a continuous and uncontrolled growth of microalgae (or floating aquatic plants such as, for example, water hyacinth *(Eichhornia)* and water lettuce (*Pistia*)) that, due to their size and density, prevent photosynthesis as they darken the environment where they grow and then they die from lack of oxygen. Excess nutrients mainly nitrogen and phosphorus from water-soluble chemical fertilizers are continuously carried to springs, rivers and lakes rapidly nourishing the microalgae present therein, which multiply and cover the surface of lakes and rivers by forming a dense green, black, or even red layer. In this process, in the progressive absence of oxygen and without the provision of more nutrients, fish and all aquatic fauna die, giving water an unpleasant smell and making the waters unfit for consumption, in addition to being an environmental issue.

In view of this scenario, many countries in the world, including Brazil, are restricting the use of phosphorus in agriculture so as not to impact the excessive nutrition of microalgae. Laws are being created to control the use of phosphorus fertilizers, as well described in the book "Agrominerais para o Brasil", by Francisco R.C Fernandes, Adão B. da Luz, Zuleica C.C. Castilho, Rio de Janeiro: CETEM/MCT, 2010, which also mentions that:
- High solubility of phosphate fertilizers would cause most of it to be solubilized/leached after the first rainfall event. Only a small part of it would be used by cultivars, most of it being dragged by the surface water or going deep into the soil;
- Dissolved and dragged phosphate would pollute water streams and groundwater, which would be facilitated by the compaction of tropical soils.

Oba et al. (2000) and Sanchez & Uehar (1980) also state that agriculture today would be the most aggressive industrial activity to surface and subterranean water in Brazil. The most obvious sign of this effect would be eutrophication and the subsequent death in water streams.

The accelerated eutrophication process, also known as cultural eutrophication, has been observed in reservoirs and lakes due to the increased use of fertilizers in watershed areas, increased population numbers and the high degree of urbanization, which also contribute to the input of nutrients. At the same time, multiple use of water has been intensified, making dam and basin management very complex due to the quality of water required for various purposes.

Some particular types of algae that grow in nutrient-enriched lakes and reservoirs, such as blue-green algae or cyanobacteria, as well as dinoflagellate algae that may cause red tides, release highly powerful toxins that are poisonous even at very low concentrations. Some of these toxins have deleterious effects on the liver of animals at minimal concentrations, and may cause the livestock and even humans to die after ingesting them at high concentrations.

One way to treat and disinfect surface waters where these algae grow would be to add chlorine, but unfortunately it leads to the formation of carcinogenic compounds.

Also, high nitrogen concentrations in the form of nitrate in water, which may come from water-soluble fertilizers, may also cause public health problems. These high concentrations may inhibit the children's ability to incorporate oxygen into their blood, and as a result, a condition designated blue baby syndrome or methemoglobinemia occurs.

In addition to these problems, flowering of algae and other aquatic plants results in reduced water transparency, which compromises the recreational value of lakes, especially for swimming and navigation. Water hyacinths and water lettuces can cover large areas close to the beach and can go into open waters, often occupying the entire surface of the lake and dam. As already explained, these floating macrophyte blocks prevent light penetration and produce large amounts of dead organic matter that can lead to low oxygen concentrations and gas emission such as methane and hydrogen sulfide from plant decomposition. In addition to this, these floating plant masses can restrict access to fishing or recreation and block irrigation and navigation channels.

As commented on above, both nitrogen and phosphorus are nutrients that cause eutrophication, but the big question is: what is the limiting nutrient for eutrophication? Limiting nutrient is meant to be the one nutrient that limits the growth of aquatic plants that cause eutrophication. In other words, controlling this nutrient will cause a drastic decrease in the aquatic plant and accordingly decreased eutrophication.

A series of thesis in the biological field at Great Lakes in the United States/Canada, all of them using the "Provisional Algal Assay Procedure" (USDA, 1996) have shown that aquatic plants respond much more to phosphorus than nitrogen (Moloney et al., 1972) evidencing that most of these lakes have phosphorus limiting factors.

A microcosm experiment where 320 L of water from the Minnesota Lake or Oregon Lake was surrounded by clear plastic and then enriched with various nutrients has shown that P (phosphorus) is the main eutrophication controlling nutrient (Powers et al., 1972).

A more direct study on the importance of P for eutrophication was done in an experimental lake in an area northwest of Ontario. The lakes have been enriched with P for a few years. These P-enriched lakes used atmospheric nitrogen (N) and algal carbon (C), which caused the appearance of cyanobacteria leading to eutrophication. However, when both N and C were added without P, the effects were minimal, making it clear that the limiting factor for eutrophication is P (Schindler, 1974, 1975, 1977).

In another experiment in an experimental lake in Washington near Seattle, in the state of Washington, USA, the lake was heavily loaded with nutrients through a sewage channel, and then the lake was extremely eutrophized. Then, in 1963, the sewage was diverted from the lake. In 1969, chlorophyll during summer time and phosphate in winter only declined by 28% as compared to the previous year but nitrate has declined even less, about 10%, and the lake returned to the mesotropic state, showing that P is the limiting factor (Edmondson, 1970).). Another example is Lake Eire that began to suffer oxygen depletion because of eutrophication. In 1968 the amount of P that was thrown into the lake was estimated to be 20,000 tons per year and the surface lake water had a total of around 22 P per liter. In 1982, improved waste treatment has reduced the amount thrown into the lake to 11,000 tons of P per year, reducing the amount of P/L to 12 µg, hence considerably reducing eutrophication (Boyce et al., 1987).

After many years of research on the effects of nutrients in lakes or reservoirs to generate eutrophication, a mathematical model has been created whereby the amount of algae can be measured based on the amount of P, as follows: Clₐ = (Lₚ / Qₛ) /[(1+(z/Qₛ)^{0.5}] (Vollenweider, 1976), where:
Clₐ - Algae biomass per mg/m³
Lₚ - total phosphorus added in g/m²
z - lake depth
Qₛ - lake or reservoir area expressed in m² or acre

The important thing is that this model fits to most of the world's lakes and reservoirs where eutrophication has been studied and the above model was able to predict eutrophication only by the amount of phosphorus input, strongly evidencing the importance of phosphorus in the eutrophication phenomenon. The Vollenweider model is still widely used by people who manage water quality.

Thus, for lakes and reservoirs, phosphorus (P) is taken as the limiting nutrient. Rivers and large reservoirs, such as lakes, also have phosphorus (P) as the limiting element, although they do not go through anaerobic periods, thereby not releasing large P concentrations from the sediments deposited at the bottom of the medium.

One of the first experiments made in rivers and reservoirs on P limitation was a study on P (phosphorus) addition into the Michigan River and a study on the yield of trouts in the river ("DL Correll. 1958. Alteration of the productivity of a trout stream by the addition of phosphate. M.S. thesis. Michigan State University"). This experiment was undertaken by increasing from about 8 µg P for each liter of water to about 70 µg per liter of water. The P increase was detected for about 4 km and the algae concentration increased by 3 times.

Stock & Shortreed, 1978 conducted a study in rivers where they increased the concentration of phosphorus in one experiment, in another experiment there was an increase in the concentration of nitrogen and a third experiment was made by increasing the concentration of both (P and N). In the result with P, there was a 4-fold increase in algae than with other experiments.

In another experiment performed in a river in Alaska (Peterson et al., 1985) in order to increase the P concentration to 10 µg per liter of water, Chlorophyll and periphyton (algae) were increased for about 10 km and the river was changed from a heterotrophic to an autotrophic system. These effects have increased bacterial activity and increased the size of aquatic insects. These studies, although smaller than studies in lakes, indicate that P is a limiting factor in rivers and reservoirs.

Also, in analyzes made in 381 rivers and their surroundings in the United States from 1974 to 1981, it was found that the average P concentration was 130 µg per liter of water, much higher than the recommended levels.

In a study carried out by Soballe & Kimmel in 1987, data from 345 rivers and 812 lakes and reservoirs from NES (National Eutrophication Survey) were analyzed. Statistically, multiple regression studies have shown that both rivers, lakes and reservoirs had a strong correlation between increased algal population and P concentration, and that this relationship is stronger in lakes, then reservoirs and then rivers.

That is, the relationship between phosphorus concentration in all types of aquatic environments, such as lakes, rivers, ponds, and reservoirs, and the eutrophication of algae in these waters is clearly known.

Formula 1 - Algae Formation in the Eutrophication Process 106CO₂ + 16NO₃⁻ + HP0₄²⁻ + 122H₂O + 18H⁺ → C₁₀₆H₂₆₃O₁₁₀N₁₆P (algae bioplasma +138O₂)

Five rating categories for surface water have been established (categories I, II, III, IV and V) and with that, several parameters are measured within these categories, it being important to note that the main characteristics are N and P concentration, algal chlorophyll and dissolved oxygen.

Table 1 below shows said categories I, II, III, IV and V as a criterion for eutrophication in lakes and reservoirs, showing that the maximum level of total nitrogen (TN) in mg/L (i.e., ppm) is much greater than the maximum level of total phosphorus (TP) in mg/L. That is, a smaller amount of P than N already characterizes eutrophication.

**TABLE 1 - Surface Water Quality Rating**

| Items | Surface Water Quality Rating | | | | |
|---|---|---|---|---|---|
| | Class I | Class II | Class III | Class I | Class V |
| Water temperature (°C) | Maximum weekly increase ≤ 1; maximum weekly reduction ≤ 2 | | | | |
| Ph | 6∼9 | | | | |
| DO (mg/L) | Saturation ≥ 90% | ≥ 6 | ≥ 5 | ≥ 3 | ≥ 2 |
| COD_{Mn} (mg/L) | ≤ 2 | ≤ 4 | ≤ 6 | ≤ 10 | ≤ 15 |
| COD_{Cr} (mg/L) | ≤ 15 | ≤ 15 | ≤ 20 | ≤ 30 | ≤ 40 |
| BOD₅ (mg/L) | ≤ 3 | ≤ 3 | ≤ 4 | ≤ 6 | ≤ 10 |
| TN (mg/L) | ≤ 0.2 | ≤ 0.5 | ≤ 1.0 | ≤ 1.5 | ≤ 2.0 |
| NH₃-N (mg/L) | ≤ 0.15 | ≤ 0.5 | ≤ 1.0 | ≤ 1.5 | ≤ 2.0 |
| NO₂-N (mg/L) | ≤ 0.06 | ≤ 0.1 | ≤ 0.15 | ≤ 1.0 | ≤ 1.0 |
| TP (mg/L) | ≤ 0.01 | ≤ 0.025 | ≤ 0.05 | ≤ 0.1 | ≤ 0.2 |
| Chlorophyll a | ≤ 0.001 | ≤ 0.004 | ≤ 0.01 | ≤ 0.03 | ≤ 0.065 |
| Transparency (m) | ≥ 15 | ≥ 4 | ≥ 2.5 | ≥ 1.5 | ≥ 0.5 |
| *Escherichia coli* (L⁻¹) | ≤ 200 | ≤ 2000 | ≤ 10000 | ≤ 20000 | ≤ 40000 |

| | | | | | |
|---|---|---|---|---|---|
| DO: dissolved oxygen; COD_{Mn} : Chemical oxygen demand by K₂MnO₄ oxidation method; COD_{Cr}: Chemical oxygen demand by the chromium oxidation method; BOD₅: Biological oxygen demand; TN: Total nitrogen; TP: Total phosphorus. Source: The criteria of surface water quality for lakes or reservoir (CNEPA, 2002) | | | | | |

Table 2 below, in turn, shows 4 characteristics relative to total phosphorus (TP) and total nitrogen (TN). Again, it is important to emphasize that P values are extremely lower than N values. Under this condition, for example, when considering eutrophic water, 1000 to 2000 µg per liter is required, for phosphorus values are from 30 to 100.

**TABLE 2 - N and P values in several eutrophic waters**

| Eutrophic Status | TP (µg/L) | TN (µg/L) | Primary yield | TNI | References |
|---|---|---|---|---|---|
| Oligotropic water | 5 ∼ 10 | 250 ∼ 600 | 5 ∼ 300 mg C/m² | 0 ∼ 30 | Likens et al. (1977); Cheng and Li (2006); Richardson et al. (2007) |
| Moderately eutrophic | 10 ∼ 30 | 500 ∼ 1100 | 1000 mg C/(m².d) | 31 ∼ 60 | |
| Eutrophic | 30 ∼ 100 | 1000 ∼ 2000 | - | 61 ∼ 100 | |
| Hypereutrophic | > 100 | > 2000 | - | > 100 | |

| | | | | | |
|---|---|---|---|---|---|
| TN: Total nitrogen; TP: Total phosphorus; TNI: Total Nutrient Status Index | | | | | |

As mentioned, N and P are the main factors that influence eutrophication of a lake or reservoir. The molecular formula of an algae (dry matter) - C₁₀₆H₂₆₃O₁₁₀N₁₆P - shows that both N and P are the nutrients found in lower amounts in Algae and, therefore, they are the main limiting factors. Particularly P, which, as shown in the molecular formula of algae, is in the lowest level of them all. In addition, as commented on above, it is possible for the algae to obtain N from the air, which is not the case with phosphorus.

Thus, the influence of both nitrogen and phosphorus on the eutrophication process is clear, and the use of water-soluble fertilizers in soil fertilization causes such environmental impact on aquatic environments (e.g., lakes, ponds, rivers and reservoirs).

Particularly under the prevailing conditions of tropical soils there would be rapid retrogradation of water-soluble phosphates added to the soil, which would react with iron and aluminum present in the soil, forming poorly soluble phosphates unusable by the plants, or then they would return to the apatite form, which is also poorly soluble. As a result, the use by plants of the phosphorus present in applied fertilizers would be less than 15%.

DE 1236484 B discloses a method for processing magnesium-containing potassium salts in the production of thermophosphate.

WO 02/083598 A1 discloses a long-acting phosphorus fertilizer that contains a phosphorus source and an iron source, at least 10% by weight of the phosphorus present in the phosphorus fertilizer being insoluble in water but soluble in neutral ammonium citrate.

CA 2914452 A1 discloses a homogeneous fertilizer granule comprising slow-release (e.g. struvite) and fast release sources of phosphorus.

That is, there is a need for reducing water eutrophication, particularly that caused by water-soluble fertilizers, so that there is a decrease in the environmental impact caused in waters near to sites where fertilizers are applied or produced. Thus, the object of the invention is to provide a solution for reducing water eutrophication caused by fertilizers, particularly due to the production of fertilizers and/or fertilization of soils.

### SUMMARY OF THE INVENTION

The invention relates to the use of a poorly water-soluble thermophosphate fertilizer to reduce water eutrophication caused by fertilizers, according to claim 1. The invention further relates to a method of reducing water eutrophication caused by fertilizers, according to claim 4.

### BRIEF DESCRIPTION OF THE FIGURE

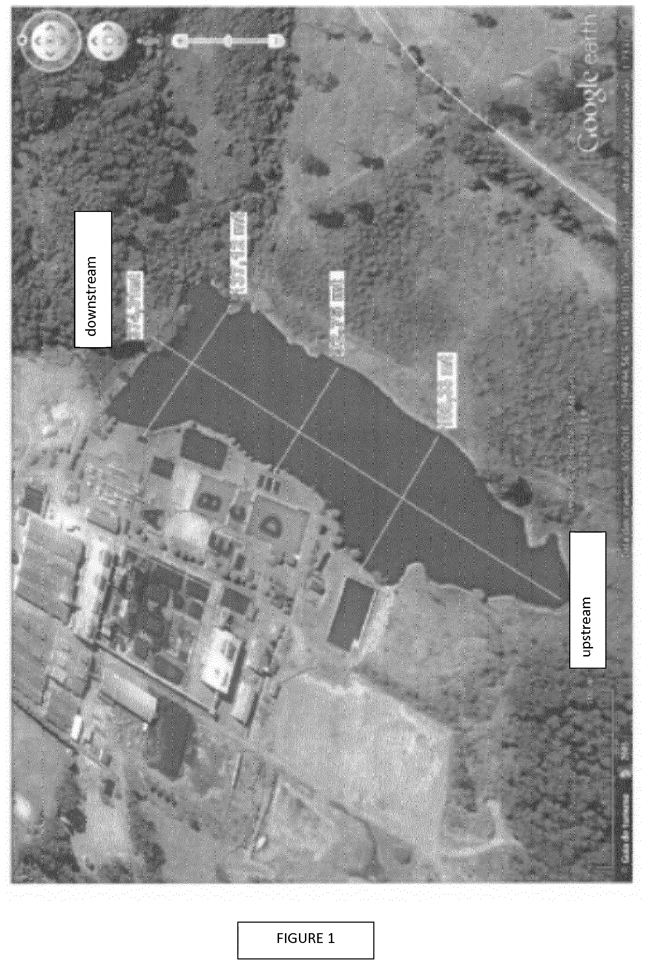

Figure 1 depicts a dam next to a thermophosphate manufacturing plant subject to the use and method of the invention.

### DETAILED DESCRIPTION OF THE INVENTION

Given the environmental issues caused by the use of fertilizers having water-soluble components, which causes leaching thereof and consequent eutrophication of the final aquatic environment, it was found that the use of a poorly soluble fertilizer has resulted in reduced eutrophication of waters near to sites where fertilizers are produced or applied.

Thus, one embodiment of the invention is the use of a poorly water-soluble thermophosphate fertilizer to reduce water eutrophication caused by fertilizers, particularly due to fertilizer production or soil fertilization (application of fertilizers).

The term "poorly water-soluble thermophosphate fertilizer" means the thermophosphate fertilizer having one or more elements (e.g., phosphorus, nitrogen, etc.) that solubilize in very small amounts in water. The poorly water-soluble thermophosphate fertilizer used in the invention exhibits phosphorus solubility (in terms of P₂O₅) in water of at most 1000 ppm, preferably at most 600 ppm, and more preferably 400 ppm. Fertilizers are, however, soluble in 2% citric acid and also in ammonium neutral citrate plus water (CNA).

Below Table 3 is provided showing water solubility of ready thermophosphate fertilizers that are within the scope of the invention (Yoorin thermophosphates)

**TABLE 3 - P₂O₅ water solubility of thermophosphate fertilizers that are within the scope of the invention**

| FERTILIZER | % P₂O₅ Total | % P₂O₅ soluble in 2% citric acid | % CNA soluble P₂O₅ | Water-soluble P₂O₅ (ppm) |
|---|---|---|---|---|
| YOORIN MASTER | 18.52 | (<0.15 mm) 17.5 | (<0.15 mm) 9.55 | (<0.15 mm) 503 |
| MG YOORIN | 18.52 | (9<0.15 mm) 17.39 | (< 0.15 mm) 10.66 | (< 0.15 mm) 592 |
| MC 60 S YOORIN | 17.40 | 12.04 | 4.80 | 390 |
| YOORIN MASTER | 18.10 | 16.52 | 7.95 | 367 |

Table 3 shows that ready thermophosphate fertilizers are nearly water insoluble and therefore do not contribute to eutrophication processes.

In contrast, when common phosphate fertilizers are taken into consideration, they are all found to be highly water-soluble, as shown in Table 4 below:

**TABLE 4 - Water-soluble Phosphate Fertilizers outside the scope of the invention - P₂O₅ water solubility, 2% citric acid and CNA**

| FERTILIZER | % P₂O₅ Total | % P₂O₅ soluble in 2% citric acid | % CNA soluble P₂O₅ | Water-soluble P₂O₅ (ppm) |
|---|---|---|---|---|
| TSP GRANULATE | 46.84 | 39.35 | 45.43 | 375,500 |
| TSP FINE - TRIPLE | 46.19 | 40.77 | 44.81 | 388,000 |
| Simple SSP | 19.70 | 17.66 | 17.60 | 169,300 |
| Granulated MAP | 54.75 | 51.30 | 53.32 | 465,100 |

All of the examples of Table 4 above are solubilized in water at levels close to 500,000 ppm, except for simple SSP, which is a fertilizer obtained by grinding phosphate rock and mixing it with sulfuric acid, having low P₂O₅ content, but not comparable to those fertilizers within the scope of the present invention.

The poorly water-soluble thermophosphate fertilizer that reduces water eutrophication caused by fertilization comprises, in % by mass based on the total mass of the fertilizer:
P₂O₅: minimum 15.0% and maximum 21.0%;
Ca: minimum 13.5% and maximum 22.5%;
Mg: minimum 3.0% and maximum 11.0%; and
Si: minimum 6.3% and maximum 13.7%;

Said poorly water-soluble thermophosphate fertilizer is obtained by melting at temperatures from 1350 °C to 1450 °C and quenching, particularly with large volumes of water, even more particularly with 80 parts by volume of water for each part of volume of molten material. Thus, the molten material instantly solidifies as a poorly water-soluble phosphate glass.

All this water mass and poorly water-soluble glass is transported to a gravitational draining system ("closed" and continuous recycling system) consisting of several concrete tanks (sedimentation tanks) to separate molten phosphate glass from cooling water. The drained water separated from solids cools again the molten thermophosphate in other furnaces sequentially, while the phosphate glass placed in an open area drains the remaining volume of water. The phosphates (phosphate glasses) thus obtained, while still containing moisture water, are dried in rotary dryers, ground and packed in bags for different classes of thermophosphate fertilizers.

Examples of commercially available thermophosphate fertilizers available for application within the scope of the invention are: YOORIN MASTER, MG YOORIN, MC 60 S YOORIN.

The invention also relates to a method of reducing water eutrophication caused by fertilizers, particularly caused by the production of fertilizers or soil fertilization, which comprises the step of fertilizing the soil with a poorly water-soluble thermophosphate fertilizer having the aforementioned characteristics.

### EXAMPLES

The following are examples that demonstrate the low solubility of thermophosphate fertilizers that reduce eutrophication caused by soil fertilization, as they are not leached or solubilized by rainwater or irrigation water and carried to ponds, lakes and reservoirs.

In the production of thermophosphates an "open" water recirculation system is used for external cooling of electric furnaces. In such cooling system, water has no direct contact with the product being processed. Cooling water comes from a dam, passes through the furnaces, refrigerates them and returns to a sedimentation tank, and from there, it goes back to the dam.

Figure 1 shows a dam next to a thermophosphate manufacturing facility, particularly Yoorin thermophosphates, showing the water system used in the dam in the process of producing Yoorin molten phosphates, such as (I) furnace steel jacket cooling water working in an open-loop, and (II) phosphate glass washing and cooling water produced and processed in concrete tanks A, B, C, D and E (outside the lake), working in a closed-loop (see table 5, sedimentation tank). Another dam (not represented) designated herein as Represa Cipó, which is used for generating electricity and supplying water to the city, forms a small river that leads upstream water to downstream of the dam, wherein the dam centered on the image of Figure 1 is approximately 375 m long by 110 m wide.

Feedwater of the dam of Figure 1 comes from the river upstream from the dam and flows downstream being carried by pipes into melting furnaces at Yoorin. This water, after being used as cooling water for phosphate melting furnace hoods, is drained downstream, continuing the Lake formation water stream (see Table 5, Upstream and Downstream).

Inlet and outlet water monitoring is made for phosphorus content (ppm), as can be seen in Table 5 below of P₂O₅ solubility in water.

**TABLE 5 - P₂O₅ water solubility in the production of thermophosphate fertilizer that is within the scope of the invention**

| FERTILIZER | Amount Phosphorus (ppm) | Downstream Phosphorus (ppm) | Phosphorus Sedimentation Tank (ppm) |
|---|---|---|---|
| September/2015 | 1.04 | 0.970 | - |
| November/2015 | 0.296 | 0.150 | - |
| February/2016 | 1.980 | 1.560 | - |
| April/2016 | 1.380 | 1.090 | - |
| May/2016 | - | - | 17.28 |

The 17.28 ppm value present in Table 5 relative to the May 2016 sampling of closed-loop draining water also shows very low phosphorus solubilization by the manufacturing process conditions (high phosphate melting temperatures, contact time with cooling water, all of them being favorable conditions for an easy solubilization).

Moreover, by comparing the upstream and downstream phosphorus concentration, it is evident that the fertilizer in sedimentation tanks of an open-loop water cooling system, after washing, is not solubilized when washed with water. Thus, it is noted that the phosphorus concentration is very low downstream, being of at most 1.6 ppm, which causes reduced eutrophication caused by using fertilizers that provide soluble phosphorus to algae and microalgae. Thus, in the production of poorly soluble thermophosphate fertilizers there is reduced eutrophication.

Figure 1 illustrates the quality of water free from eutrophication.

Thus, the use of poorly water-soluble thermophosphate fertilizers reduces eutrophication caused by fertilizers, particularly caused by their production or soil fertilization.

## Claims

1. Use of a poorly-water-soluble thermophosphate fertilizer, **characterized in that** it is for use for reducing water eutrophication caused by fertilizers, in which the poorly-soluble thermophosphate fertilizer comprises, in% by mass based on the total mass of the fertilizer:
P₂O₅: minimum 15.0% and maximum 21.0%;
Ca: minimum 13.5% and maximum 22.5%;
Mg: minimum 3.0% and maximum 11.0% and
Si: minimum 6.3% and maximum 13.7%;
the poorly water-soluble thermophosphate fertilizer being a thermophosphate fertilizer with phosphorus solubility (in terms of P₂O₅) in water of at most 1000 ppm; and
the poorly water-soluble thermophosphate fertilizer being obtained by melting at temperatures of from 1350 °C to 1450 °C, followed by quenching.

2. The use according to claim 1, **characterized in that** the poorly water-soluble thermophosphate fertilizer exhibits phosphorus solubility (in terms of P₂O₅) in water of at most 600 ppm.

3. The use according to claim 2, **characterized in that** the poorly water-soluble thermophosphate fertilizer has phosphorus solubility (in terms of P₂O₅) in water of at most 400 ppm.

4. A method of reducing water eutrophication caused by fertilizers, **characterized in that** it comprises the step of fertilizing the soil with a poorly water-soluble thermophosphate fertilizer, in which the poorly-soluble thermophosphate fertilizer comprises, in % by mass based on the total mass of the fertilizer:
P₂O₅: minimum 15.0% and maximum 21.0%;
Ca: minimum 13.5% and maximum 22.5%;
Mg: minimum 3.0% and maximum 11.0% and
Si: minimum 6.3% and maximum 13.7%;
the poorly water-soluble thermophosphate fertilizer being a thermophosphate fertilizer with phosphorus solubility (in terms of P₂O₅) in water of at most 1000 ppm; and
the poorly water-soluble thermophosphate fertilizer being obtained by melting at temperatures of from 1350 °C to 1450 °C, followed by quenching.

5. The method according to claim 4, **characterized in that** the poorly water-soluble thermophosphate fertilizer exhibits phosphorus solubility (in terms of P₂O₅) in water of at most 600 ppm.

6. The method according to claim 5, **characterized in that** the poorly water-soluble thermophosphate fertilizer exhibits phosphorus solubility (in terms of P₂O₅) in water of at most 400 ppm.

## Patentansprüche

1. Verwendung eines schwer wasserlöslichen Thermophosphatdüngers, **dadurch gekennzeichnet, dass** sie zur Verwendung zur Verringerung von durch Dünger verursachter Eutrophierung dient, wobei der schwer wasserlösliche Thermophosphatdünger, in Gewichts-% bezogen auf das Gesamtgewicht des Düngers, umfasst:
P₂O₅: minimal 15,0% und maximal 21,0%,
Ca: minimal 13,5% und maximal 22,5%,
Mg: minimal 3,0% und maximal 11,0%, und
Si: minimal 6,3% und maximal 13,7%,
wobei der schwer wasserlösliche Thermophosphatdünger ein Thermophosphatdünger mit einer Phosphorlöslichkeit (bezogen auf P₂O₅) in Wasser von höchstens 1000 ppm ist, und
wobei der schwer wasserlösliche Thermophosphatdünger erhalten wird durch Schmelzen bei Temperaturen von 1350 °C bis 1450 °C, gefolgt von Abschrecken.

2. Verwendung gemäß Anspruch 1, **dadurch gekennzeichnet, dass** der schwer wasserlösliche Thermophosphatdünger eine Phosphorlöslichkeit (bezogen auf P₂O₅) in Wasser von höchstens 600 ppm aufweist.

3. Verwendung gemäß Anspruch 2, **dadurch gekennzeichnet, dass** der schwer wasserlösliche Thermophosphatdünger eine Phosphorlöslichkeit (bezogen auf P₂O₅) in Wasser von höchstens 400 ppm besitzt.

4. Verfahren zur Verringerung von durch Dünger verursachter Eutrophierung, **dadurch gekennzeichnet, dass** es den Schritt des Düngens des Bodens mit einem schwer wasserlöslichen Thermophosphatdünger umfasst, wobei der schwer wasserlösliche Thermophosphatdünger, in Gewichts-% bezogen auf das Gesamtgewicht des Düngers, umfasst:
P₂O₅: minimal 15,0% und maximal 21,0%,
Ca: minimal 13,5% und maximal 22,5%,
Mg: minimal 3,0% und maximal 11,0%, und
Si: minimal 6,3% und maximal 13,7%,
wobei der schwer wasserlösliche Thermophosphatdünger ein Thermophosphatdünger mit einer Phosphorlöslichkeit (bezogen auf P₂O₅) in Wasser von höchstens 1000 ppm ist, und
wobei der schwer wasserlösliche Thermophosphatdünger erhalten wird durch Schmelzen bei Temperaturen von 1350 °C bis 1450 °C, gefolgt von Abschrecken.

5. Verfahren gemäß Anspruch 4, **dadurch gekennzeichnet, dass** der schwer wasserlösliche Thermophosphatdünger eine Phosphorlöslichkeit (bezogen auf P₂O₅) in Wasser von höchstens 600 ppm aufweist.

6. Verfahren gemäß Anspruch 5, **dadurch gekennzeichnet, dass** der schwer wasserlösliche Thermophosphatdünger eine Phosphorlöslichkeit (bezogen auf P₂O₅) in Wasser von höchstens 400 ppm besitzt.

## Revendications

1. Utilisation d'un engrais thermophosphaté peu soluble dans l'eau, **caractérisé en ce qu'**il est utilisé pour réduire l'eutrophisation de l'eau causée par les engrais, dans laquelle l'engrais thermophosphaté peu soluble comprend, en % en masse par rapport à la masse totale de l'engrais :
P₂O₅: minimum 15,0 % et maximum 21,0 % ;
Ca : minimum 13,5 % et maximum 22,5 % ;
Mg : minimum 3,0 % et maximum 11,0 % et
Si : minimum 6,3 % et maximum 13,7 % ;
l'engrais thermophosphaté faiblement soluble dans l'eau est un engrais thermophosphaté dont la solubilité du phosphore (en termes de P₂O₅) dans l'eau est d'au plus 1 000 ppm ; et
l'engrais thermophosphaté peu soluble dans l'eau est obtenu par fusion à des températures comprises entre 1350 °C et 1450 °C, suivie d'une trempe.

2. Utilisation selon la revendication 1, **caractérisée en ce que** l'engrais thermophosphaté faiblement soluble dans l'eau présente une solubilité du phosphore (en termes de P₂O₅) dans l'eau d'au plus 600 ppm.

3. Utilisation selon la revendication 2, **caractérisée en ce que** l'engrais thermophosphaté faiblement soluble dans l'eau présente une solubilité du phosphore (en termes de P₂O₅) dans l'eau d'au plus 400 ppm.

4. Procédé de réduction de l'eutrophisation de l'eau causée par les engrais, **caractérisé en ce qu'**il comprend l'étape de fertilisation du sol avec un engrais thermophosphaté peu soluble dans l'eau, dans lequel l'engrais thermophosphaté peu soluble comprend, en % en masse par rapport à la masse totale de l'engrais :
P₂O₅ : minimum 15,0 % et maximum 21,0 % ;
Ca : minimum 13,5 % et maximum 22,5 % ;
Mg : minimum 3,0 % et maximum 11,0 % et
Si : minimum 6,3 % et maximum 13,7 % ;
l'engrais thermophosphaté faiblement soluble dans l'eau est un engrais thermophosphaté dont la solubilité du phosphore (en termes de P₂O₅) dans l'eau est d'au plus 1 000 ppm ; et
l'engrais thermophosphaté peu soluble dans l'eau est obtenu par fusion à des températures comprises entre 1350 °C et 1450 °C, suivie d'une trempe.

5. Utilisation selon la revendication 4, **caractérisée en ce que** l'engrais thermophosphaté faiblement soluble dans l'eau présente une solubilité du phosphore (en termes de P₂O₅) dans l'eau d'au plus 600 ppm.

6. Utilisation selon la revendication 5, **caractérisée en ce que** l'engrais thermophosphaté faiblement soluble dans l'eau présente une solubilité du phosphore (en termes de P₂O₅) dans l'eau d'au plus 400 ppm.
